# EUROPEAN PATENT SPECIFICATION

(11) **EP 3 425 988 B1**
(45) Date of publication and mention of the grant of the patent: **03.06.2020**
(21) Application number: 18190057.2
(22) Date of filing: 17.12.2014
(51) Int. Cl.: H04W 72/12, H04L 5/14

(54) **FULL DUPLEX IN A WIRELESS COMMUNICATION NETWORK**
VOLLDUPLEX IN EINEM DRAHTLOSKOMMUNIKATIONSNETZWERK
DUPLEX INTÉGRAL DANS UN RÉSEAU DE COMMUNICATIONS SANS FIL

(43) Date of publication of application: 09.01.2019
(62) Divisional of application: 14828570.3
(73) Proprietor: Telefonaktiebolaget LM Ericsson (publ), 164 83 Stockholm (SE)
(72) Inventor: FURUSKÄR, Anders, SE-113 46 Stockholm (SE); DAHLMAN, Erik, SE-112 23 Stockholm (SE); FRODIGH, Magnus, SE-192 73 Sollentuna (SE); HÖÖK, Mikael, SE-191 34 Sollentuna (SE); PARKVALL, Stefan, SE-167 57 Bromma (SE); TIDESTAV, Claes, SE-746 31 Bålsta (SE)
(74) Representative: Ericsson

(56) References cited:
- US-A1- 2013 188 530
- US-A1- 2013 194 984

## Description

### TECHNICAL FIELD

The proposed technology generally relates to transmission and reception in wireless communication networks and more specifically to the use of full duplex in wireless communication networks.

### BACKGROUND

Conventional radio transceivers cannot transmit and receive signals at the same time on the same frequency band. The interference from the transmitted signal to the received signal is too strong to decode the received signal. Instead conventional transceivers transmit and receive on different frequencies using Frequency Division Duplex (FDD) and/or at different time instants using Time Division Duplex (TDD).

However, recent developments [1, 2] in transceiver design allow simultaneous transmission and reception on the same frequency. This is known as Full Duplex. To achieve full duplex, a radio node has to completely cancel the significant self-interference that results from its own transmission to the received signal [3]. If a node cannot hear its own signal, then its own transmissions will not interfere with other packets; it can simultaneously transmit and receive. Full duplex has tremendous implications for network design, not least of which is the fact that cellular networks could cut their spectrum needs by half.

However, in a multi-cell system, the use of full duplex in a node or cell increases the interference level in the system. This is because in each cell transmitters may be active both in the uplink and the downlink directions, and not only in one of the directions. Thus, the use of full duplex in one node or cell may severely degrade performance in a neighbouring node or cell. It is therefore not always advantageous to use full duplex in a wireless communication network.

In US 2013/0194984 A1 a decision, taken by a base station, to use full duplex in a user equipment is based on mutual interference between user equipments that may be caused if using full duplex.

### SUMMARY

It is an object to provide methods and wireless nodes for determining when to use full duplex in a wireless node for communicating in a wireless communication network.

This and other objects are met by embodiments of the proposed technology.

An aspect of the embodiments relates to a method performed by a user equipment for determining when to use full duplex in the user equipment for communicating in a wireless communication network. The method comprises the step of estimating an influence on neighbouring wireless nodes of using full duplex in the user equipment. The method further comprises the step of deciding whether to use full duplex in the user equipment or not, based on the estimated influence.

Another aspect of the embodiments relates to a user equipment configured to determine when to use full duplex in the user equipment for communicating in a wireless communication network. The user equipment is configured to estimate an influence on neighbouring wireless nodes of using full duplex in the user equipment. The user equipment is further configured to decide whether to use full duplex in the user equipment or not, based on the estimated influence.

An advantage of the proposed solution is that the local benefits of full duplex (higher bandwidth) are obtained with controlled interference levels. Other advantages will be appreciated when reading the detailed description.

### BRIEF DESCRIPTION OF THE DRAWINGS

The embodiments, together with further objects and advantages thereof, may best be understood by making reference to the following description taken together with the accompanying drawings, in which:
Figures 1a, 1b and 1c are schematic illustrations of examples of wireless nodes in some wireless communication networks.
Figure 2 is a schematic flow diagram illustrating an example of a method performed by a wireless node for determining when to use full duplex in the wireless node for communicating in a wireless communication network according to an embodiment.
Figure 3 is a schematic diagram illustrating an example of a wireless node configured to determine when to use full duplex in the wireless node for communicating in a wireless communication network according to an embodiment.
Figure 4 is a schematic diagram illustrating an example of a wireless node operative to determine when to use full duplex in the wireless node for communicating in a wireless communication network according to an alternative embodiment.
Figure 5 is a schematic block diagram illustrating an example of a wireless node for determining when to use full duplex in the wireless node for communicating in a wireless communication network according to an alternative embodiment.

### DETAILED DESCRIPTION

Throughout the drawings, the same reference numbers are used for similar or corresponding elements.

As described in the background section, the use of full duplex in one node or cell may severely degrade performance in a neighbouring node or cell. It is therefore not always advantageous to use full duplex in a wireless communication system. Thus, there is a need of an efficient procedure for determining when it is appropriate to use full duplex and when it is not.

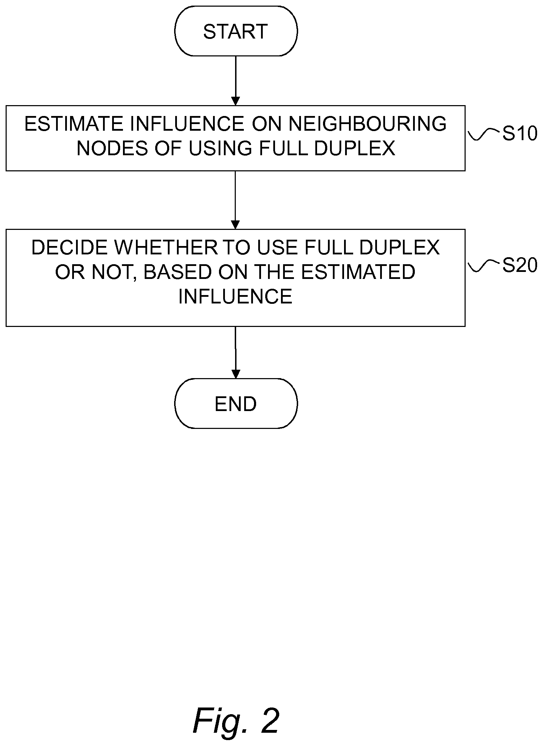

The proposed solution involves using full duplex adaptively, based on what influence, or what negative/harmful impact, the use of full duplex in a particular node has on neighbouring nodes or cells. Figure 2 is a schematic flow diagram illustrating an example of a method performed by a wireless node for determining when to use full duplex in the wireless node for communicating in a wireless communication network. The method comprises a step S10 of estimating an influence on neighbouring wireless nodes of using full duplex in a wireless node. The method further comprises the step S20 of deciding whether to use full duplex in the wireless node or not, based on the estimated influence.

As described in the background section, the use of full duplex in a node may increase the interference level in the system. Thus, it may be appropriate to take into consideration what interference levels are acceptable in neighbouring wireless nodes before deciding to use full duplex in a wireless node.

If we consider an instant in time, the use of full duplex in a wireless node affects the interference generated by that node in neighbouring nodes at that time instant. However, over time and with bursty traffic, the number of such time instants when the node would use full duplex depends on the traffic load in the node. In other words, the influence or impact 'over time' on neighbouring nodes of using full duplex in a node depends on both the interference generated at each time instant when full duplex is used, and the fraction of time that full duplex is used. Here the latter factor depends on traffic load in the node.

Also, the 'relative' influence on a neighbouring node ('victim' node), i.e. how 'harmful' the use of full duplex in a node is to neighbouring nodes, may depend on the traffic load in the neighbouring nodes. For example, if a neighbouring node is lightly loaded an increase in interference may be less severe than if it is heavily loaded.

Thus, the influence on neighbouring wireless nodes of using full duplex in a wireless node may be dependent at least on the traffic load of the wireless node, and/or the traffic loads of neighbouring wireless nodes, and/or the interference generated by the wireless node in the neighbouring wireless nodes. In an example embodiment of the method of Figure 2 the step S10 of estimating the influence on neighbouring wireless nodes of using full duplex in a wireless node is thus based on at least one of the following:
an estimated traffic load of the wireless node,
estimated traffic loads of neighbouring wireless nodes,
estimated interference generated by the wireless node in the neighbouring wireless nodes.

Some example implementations:
- A heavily loaded node/cell surrounded by lightly loaded nodes/cells may use full duplex.
- A lightly loaded node/cell surrounded by heavily loaded nodes/cells is not allowed to use full duplex.
- An isolated node/cell (including all its users) is allowed to use full duplex.

Additionally, the use of full duplex can be node-specific and dependent on the channel between the individual nodes planned to be scheduled.

Node-specific examples:
- A base station that is isolated from other base stations is allowed to transmit in the downlink when those other base stations receive in the uplink.
- A cell already transmitting in downlink is allowed to also schedule uplink transmissions from a user (i.e. use full duplex), if the channel between that user and the interfered nodes is such that low interference is caused.

In a particular embodiment the step S20 of deciding whether to use full duplex in the wireless node or not is based on a comparison of the estimated traffic load of the wireless node and the estimated traffic loads of the neighbouring wireless nodes.

In another particular embodiment the step S20 of deciding whether to use full duplex in the wireless node or not is based on the estimated traffic load of the wireless node exceeding a certain percentile of an average of the estimated traffic loads of the neighbouring wireless nodes.

In a particular embodiment the step S20 of deciding whether to use full duplex in the wireless node or not is performed for each scheduled subframe.

As a complement to the proposed embodiments, a control mechanism based on subframe classification and pattern coordination between nodes can be used. In such an embodiment, some subframes are allocated for half duplex and some for full duplex, and when traffic load increases in one node the neighbouring nodes should primarily use the half duplex subframes.

There are several ways of estimating the traffic load in the different nodes. In one embodiment the estimated traffic load of a wireless node is based on resource utilization in the wireless node, and in an alternative embodiment the estimated traffic load of a wireless node is based on throughput of data traffic in the wireless node. Either of these alternative embodiments can be used for any of the wireless nodes in the wireless communication network.

Also the interference, or the coupling between a node and its neighbouring nodes, can be estimated in several ways. In one embodiment the estimated interference generated by the wireless node in the neighbouring wireless nodes may be estimated based on the absolute interference power measured in the neighbouring wireless nodes. In an alternative embodiment this interference may be estimated based on the power relative to thermal noise measured in the neighbouring wireless nodes. In both embodiments the estimations can be made based on an estimation of the channel gain between the wireless node and the neighbouring wireless nodes.

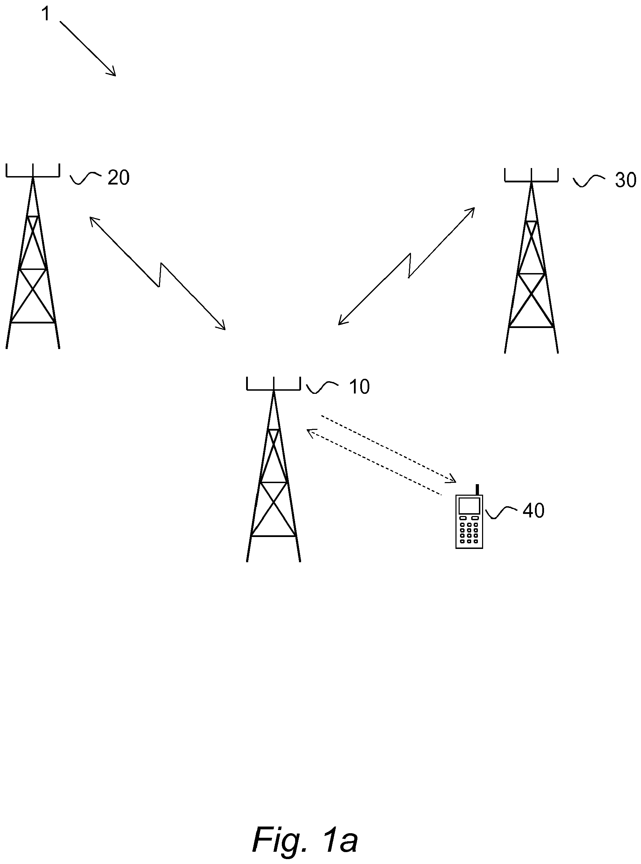

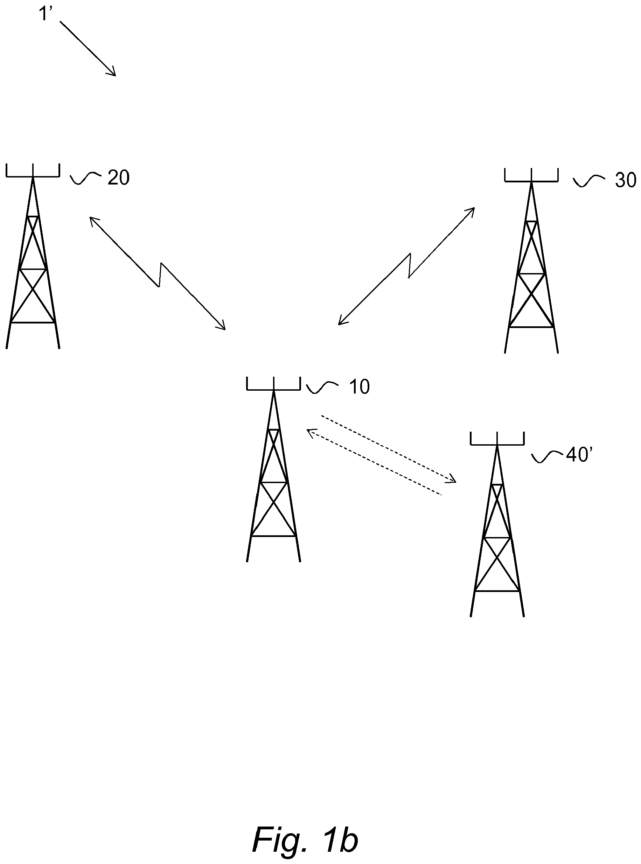

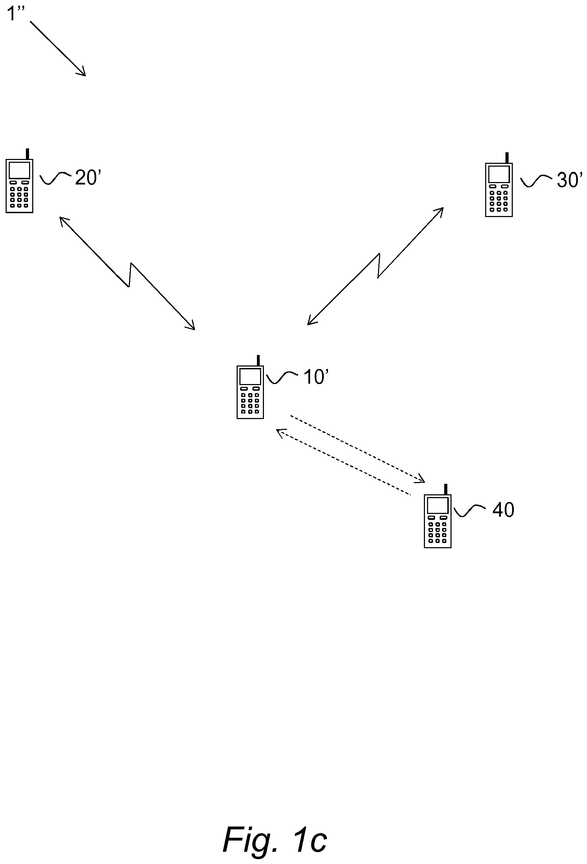

The wireless node as claimed according to the invention is a user equipment. In other examples, not claimed, the wireless node may be any node in a wireless communication network. Some examples of wireless nodes in some wireless communication networks 1, 1', 1" are schematically illustrated in Figures 1a, 1b and 1c.

In a particular non-claimed example, as illustrated in Figure 1a, the wireless node 10 is a wireless base station in a wireless communication network 1. The neighbouring wireless nodes 20, 30 may in this embodiment also be wireless base stations. The wireless node 10 may in this example communicate with user equipment 40 using full duplex, depending on the influence on the neighbouring wireless nodes 20, 30 of using full duplex in the wireless node 10.

Another implementation is schematically illustrated in Figure 1b, showing an example of full duplex being used in a backhauling context. Here the wireless node 10 is again a wireless base station, but the communication is with another wireless base station 40', providing backhaul in a wireless communication network 1'. The wireless node 10 may also in this embodiment communicate with the wireless node 40' using full duplex, depending on the influence on the neighbouring wireless nodes 20, 30 of using full duplex in the wireless node 10.

In another particular embodiment, according to the invention as claimed, illustrated in Figure 1c, the wireless node 10' is user equipment in a wireless communication network 1". The neighbouring wireless nodes 20', 30' may in this embodiment also be user equipment. The wireless node 10' may in this example communicate with user equipment 40 using full duplex, depending on the influence on the neighbouring wireless nodes 20', 30' of using full duplex in the wireless node 10'.

The proposed solution may also be implemented in a system where the architecture contains centralized processing.

In summary, the proposed solution implements adaptive usage of full duplex based on traffic load and/or neighbour node relations. An advantage of the proposed solution is that the local benefits of full duplex (higher bandwidth) are obtained with controlled interference levels.

In an example of an implementation, at least some of the steps, functions, procedures, modules and/or blocks described herein are implemented in a computer program, which is loaded into a memory for execution by processing circuitry including one or more processors. The processor(s) and memory are interconnected to each other to enable normal software execution. An optional input/output device may also be interconnected to the processor(s) and/or the memory to enable input and/or output of relevant data such as input parameter(s) and/or resulting output parameter(s).

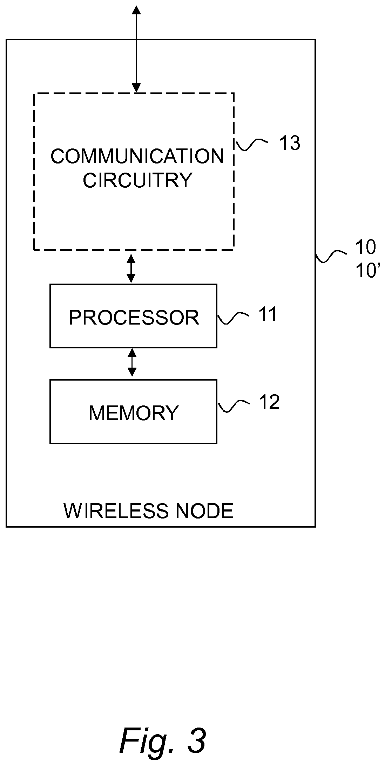

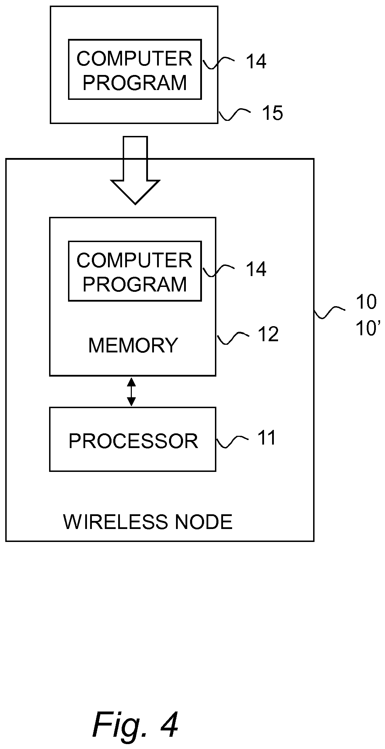

The embodiments herein may thus be implemented through one or more processors, such as a processor in the wireless node depicted in Figures 3 and 4, together with respective computer program code for performing the functions and actions of the embodiments herein.

According to an embodiment, a wireless node is configured to determine when to use full duplex in the wireless node for communicating in a wireless communication network. The wireless node is configured to estimate an influence on neighbouring wireless nodes of using full duplex in the wireless node. The wireless is further configured to decide whether to use full duplex in the wireless node or not, based on the estimated influence.

As described above, the influence on neighbouring wireless nodes of using full duplex in a wireless node may be dependent at least on the traffic load of the wireless node, and/or the traffic loads of neighbouring wireless nodes, and/or the interference generated by the wireless node in the neighbouring wireless nodes. Thus, in an embodiment the wireless node is configured to estimate the influence on neighbouring wireless nodes of using full duplex in the wireless node, based on at least one of the following:
an estimated traffic load of the wireless node,
estimated traffic loads of neighbouring wireless nodes,
estimated interference generated by the wireless node in the neighbouring wireless nodes.

In a particular embodiment the wireless node is configured to decide whether to use full duplex in the wireless node or not, based on a comparison of the estimated traffic load of the wireless node and the estimated traffic loads of the neighbouring wireless nodes.

In another particular embodiment the wireless node is configured to decide whether to use full duplex in the wireless node or not, based on the estimated traffic load of the wireless node exceeding a certain percentile of an average of the estimated traffic loads of the neighbouring wireless nodes.

In a particular embodiment the wireless node is configured to decide for each scheduled subframe whether to use full duplex in the wireless node or not.

Figure 3 is a schematic diagram illustrating an example of a wireless node 10; 10' operative to determine when to use full duplex in the wireless node for communicating in a wireless communication network according to an embodiment. In this example, the wireless node 10; 10' basically comprises a processor 11, an associated memory 12 and optional communication circuitry 13. The optional communication circuitry 13 is adapted for wireless and/or wired communication with one or more other nodes, including transmitting and/or receiving information.

As indicated in the specific example of Figure 3, the wireless node 10; 10' comprises a processor 11 and a memory 12, wherein the memory 12 comprises instructions executable by the processor 11 to perform operations of the wireless node 10; 10'. Thus, in this example embodiment the processor 11 is operative to estimate an influence on neighbouring wireless nodes of using full duplex in a wireless node. The processor 11 is further operative to decide whether to use full duplex in the wireless node or not, based on the estimated influence.

As indicated in Fig. 3, the wireless node 10; 10' may also include communication circuitry 13 for communication with one or more other nodes, including transmitting and/or receiving information. Thus, in a particular embodiment the wireless node 10; 10' comprises communication circuitry 13 configured to receive reports of estimated traffic loads of neighbouring wireless nodes, and/or estimated interference generated by the wireless node 10; 10' in the neighbouring wireless nodes, from the neighbouring wireless nodes.

As described above, at least some of the steps, functions, procedures, modules and/or blocks described above may be implemented in software such as a computer program for execution by suitable processing circuitry including one or more processing units. An examples of such an implementation is schematically illustrated in Figure 4.

According to an embodiment, schematically illustrated in Figure 4, a computer program 14 comprises instructions, which when executed by at least one processor 11, cause the processor or processors to estimate an influence on neighbouring wireless nodes of using full duplex in a wireless node, and to decide whether to use full duplex in the wireless node or not, based on the estimated influence.

By way of example, the software or computer program may be realized as a computer program product, which is normally carried or stored on a computer-readable medium, in particular a non-volatile medium. The computer-readable medium may include one or more removable or non-removable memory devices including, but not limited to a Read-Only Memory (ROM), a Random Access Memory (RAM), a Compact Disc (CD), a Digital Versatile Disc (DVD), a Blueray disc, a Universal Serial Bus (USB) memory, a Hard Disk Drive (HDD) storage device, a flash memory, a magnetic tape, or any other conventional memory device. The computer program may thus be loaded into the operating memory of a computer or equivalent processing device for execution by the processing circuitry thereof.

The proposed technology also provides a carrier 15, illustrated in Figure 4, and comprising the above computer program 14, wherein the carrier is one of an electronic signal, an optical signal, an electromagnetic signal, a magnetic signal, an electric signal, a radio signal, a microwave signal, or a computer-readable storage medium.

The flow diagram or diagrams presented above may be regarded as a computer flow diagram or diagrams, when performed by one or more processors. A corresponding wireless node may be defined as a group of function modules, where each step performed by the processor corresponds to a function module. In this case, the function modules are implemented as a computer program running on the processor. Hence, the wireless nodes may alternatively be defined as a group of function modules, where the function modules are implemented as a computer program running on at least one processor.

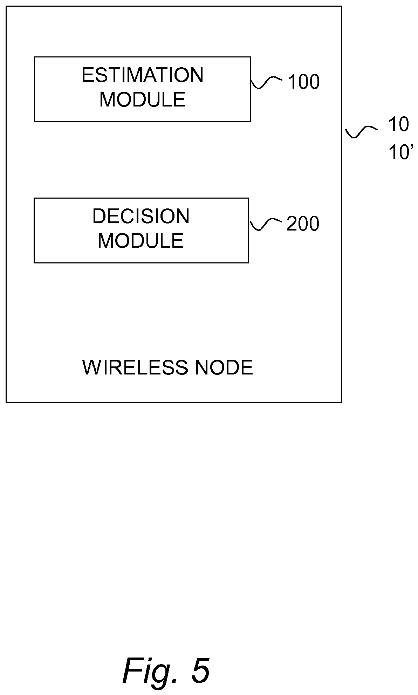

Hence, the computer program residing in memory may be organized as appropriate function modules configured to perform, when executed by the processor, at least part of the steps and/or tasks described herein. Examples of such function modules are illustrated in Figure 5.

Figure 5 is a schematic block diagram illustrating an example of a wireless node 10; 10' for determining when to use full duplex in the wireless node for communicating in a wireless communication network according to an embodiment. In this example, the wireless node 10; 10' comprises an estimation module 100 for estimating an influence on neighbouring wireless nodes of using full duplex in the wireless node. The wireless node 10; 10' further comprises a decision module 200 for deciding whether to use full duplex in the wireless node 10; 10' or not, based on the estimated influence.

In a particular embodiment, the estimated influence on neighbouring wireless nodes of using full duplex in the wireless node 10; 10' illustrated in Figure 5 is based on at least one of the following:
an estimated traffic load of the wireless node 10; 10',
estimated traffic loads of neighbouring wireless nodes,
estimated interference generated by the wireless node 10; 10' in the neighbouring wireless nodes.

When using the word 'comprise' or 'comprising' it shall be interpreted as non-limiting, i.e. meaning 'consist at least of'.

As used herein, the non-limiting term 'user equipment' or 'UE' may refer to a mobile phone, a cellular phone, a Personal Digital Assistant, PDA, equipped with radio communication capabilities, a smart phone, a laptop or Personal Computer, PC, equipped with an internal or external mobile broadband modem, a tablet PC with radio communication capabilities, a target device, a device to device UE, a machine type UE or UE capable of machine to machine communication, iPAD, customer premises equipment, CPE, laptop embedded equipment, LEE, laptop mounted equipment, LME, USB dongle, a portable electronic radio communication device, a sensor device equipped with radio communication capabilities or the like. In particular, the term 'user equipment' should be interpreted as a non-limiting term comprising any type of wireless device communicating with a radio network node in a cellular or mobile communication system or any device equipped with radio circuitry for wireless communication according to any relevant standard for communication within a cellular or mobile communication system.

As used herein, the non-limiting term 'wireless base station' may encompass different types of radio base stations including standardized base stations such as Node Bs, or evolved Node Bs, (eNodeBs), and also macro/micro/pico radio base stations, home base stations, also known as femto base stations, relay nodes, repeaters, radio access points, base transceiver stations, BTSs, and even radio control nodes controlling one or more Remote Radio Units, RRUs, or the like.

It will be appreciated that the methods and devices described herein can be combined and re-arranged in a variety of ways.

For example, embodiments may be implemented in hardware, or in software for execution by suitable processing circuitry, or a combination thereof.

The steps, functions, procedures, modules and/or blocks described herein may be implemented in hardware using any conventional technology, such as discrete circuit or integrated circuit technology, including both general-purpose electronic circuitry and application-specific circuitry.

Particular examples include one or more suitably configured digital signal processors and other known electronic circuits, e.g. discrete logic gates interconnected to perform a specialized function, or Application Specific Integrated Circuits (ASICs).

Examples of processing circuitry includes, but is not limited to, one or more microprocessors, one or more Digital Signal Processors, DSPs, one or more Central Processing Units, CPUs, video acceleration hardware, and/or any suitable programmable logic circuitry such as one or more Field Programmable Gate Arrays, FPGAs, or one or more Programmable Logic Controllers, PLCs.

It should also be understood that it may be possible to re-use the general processing capabilities of any conventional device or unit in which the proposed technology is implemented. It may also be possible to re-use existing software, e.g. by reprogramming of the existing software or by adding new software components.

The term 'processor' should be interpreted in a general sense as any system or device capable of executing program code or computer program instructions to perform a particular processing, determining or computing task.

The processing circuitry including one or more processors is thus configured to perform, when executing the computer program, well-defined processing tasks such as those described above.

The processing circuitry does not have to be dedicated to only execute the above-described steps, functions, procedure and/or blocks, but may also execute other tasks. The embodiments described above are merely given as examples, and it should be understood that the proposed technology is not limited thereto. It will be understood by those skilled in the art that various modifications, combinations and changes may be made to the embodiments without departing from the present scope as defined by the appended claims. In particular, different part solutions in the different embodiments can be combined in other configurations, where technically possible.

### REFERENCES

[1] D. W. Bliss, P. Parker, and A. R. Margetts, "Simultaneous transmission and reception for improved wireless network performance", in Statistical Signal Processing, 2007. SSP '07. IEEE/SP 14th Workshop on, Aug. 2007, pp. 478-482
[2] M. Duarte, and A. Sabharwal, "Full-duplex wireless communications using off-the-shelf radios: Feasibility and first results", in Signals, Systems and Computers (ASILOMAR), 2010 Conference Record of the Forty Fourth Asilomar Conference on, Nov. 7-10 2010, pp. 1558-1562
[3] S. Hong, J. Brand, Jung Choi, M. Jain, J. Mehlman, S. Katti, P. Levis, "Applications of self-interference cancellation in 5G and beyond", Communications Magazine, IEEE (Volume:52, Issue: 2), February 2014, pp. 114-121

## Claims

1. A method performed by a user equipment (10') for determining when to use full duplex in said user equipment (10') for communicating in a wireless communication network (1"), wherein said method comprises the steps of:
estimating (S10) an influence on neighbouring wireless nodes (20, 30, 20', 30') of using full duplex in said user equipment (10') and
deciding (S20) whether to use full duplex in said user equipment (10') or not, based on said estimated influence.

2. The method according to claim 1, wherein said estimating (S10) an influence on neighbouring wireless nodes (20, 30, 20', 30') of using full duplex in said user equipment (10') is based on at least one of the following:
an estimated traffic load of said user equipment (10');
estimated traffic loads of said neighbouring wireless nodes (20, 30, 20', 30');
estimated interference generated by said user equipment (10') in said neighbouring wireless nodes (20, 30, 20', 30').

3. The method according to any of the claims 1 to 2, wherein said deciding (S20) is performed for each scheduled subframe.

4. A user equipment (10') configured to determine when to use full duplex in said user equipment (10') for communicating in a wireless communication network (1"), wherein said user equipment (10') is configured to estimate an influence on neighbouring wireless nodes (20, 30, 20', 30') of using full duplex in said user equipment (10'); and
said user equipment (10') is configured to decide whether to use full duplex in said user equipment (10') or not, based on said estimated influence.

5. The user equipment of claim 4, wherein said user equipment (10') is configured to estimate said influence on neighbouring wireless nodes (20, 30, 20', 30') of using full duplex in said user equipment (10'), based on at least one of the following:
an estimated traffic load of said user equipment (10');
estimated traffic loads of neighbouring wireless nodes (20, 30, 20', 30');
estimated interference generated by said user equipment (10') in said neighbouring wireless nodes (20, 30, 20', 30').

6. The user equipment of any of the claims 4 to 5, wherein said user equipment (10') is configured to decide for each scheduled subframe whether to use full duplex in said user equipment (10') or not.

## Patentansprüche

1. Verfahren, das durch eine Benutzereinrichtung (10') durchgeführt wird, um zu bestimmen, wann Vollduplex in der Benutzereinrichtung (10') zum Kommunizieren in einem drahtlosen Kommunikationsnetz (1") zu verwenden ist, wobei das Verfahren die folgenden Schritte umfasst:
Schätzen (S10) eines Einflusses der Verwendung von Vollduplex in der Benutzereinrichtung (10') auf benachbarte drahtlose Knoten (20, 30, 20', 30') und
Entscheiden (S20), ob Vollduplex in der Benutzereinrichtung (10') zu verwenden ist oder nicht, basierend auf dem geschätzten Einfluss.

2. Verfahren nach Anspruch 1, wobei das Schätzen (S10) eines Einflusses der Verwendung von Vollduplex in der Benutzereinrichtung (10') auf benachbarte drahtlose Knoten (20, 30, 20', 30') auf zumindest einem der folgenden basiert:
einer geschätzten Verkehrslast der Benutzereinrichtung (10'); geschätzten Verkehrslasten der benachbarten drahtlosen Knoten (20, 30, 20', 30');
geschätzter Interferenz, die durch die Benutzereinrichtung (10') in den benachbarten drahtlosen Knoten (20, 30, 20', 30') erzeugt wird.

3. Verfahren nach einem der Ansprüche 1 bis 2, wobei das Entscheiden (S20) für jeden geplanten Subframe durchgeführt wird.

4. Benutzereinrichtung (10'), konfiguriert um zu bestimmen, wann Vollduplex in der Benutzereinrichtung (10') zum Kommunizieren in einem drahtlosen Kommunikationsnetz (1") zu verwenden ist, wobei die Benutzereinrichtung (10') konfiguriert ist zum Schätzen eines Einflusses der Verwendung von Vollduplex in der Benutzereinrichtung (10') auf benachbarte drahtlose Knoten (20, 30, 20', 30'); und
wobei die Benutzereinrichtung (10') konfiguriert ist zum Entscheiden, ob Vollduplex in der Benutzereinrichtung (10') zu verwenden ist oder nicht, basierend auf dem geschätzten Einfluss.

5. Benutzereinrichtung nach Anspruch 4, wobei die Benutzereinrichtung (10') konfiguriert ist, um den Einfluss der Verwendung von Vollduplex in der Benutzereinrichtung (10') auf benachbarte drahtlose Knoten (20, 30, 20', 30') basierend auf zumindest einem der folgenden zu schätzen:
einer geschätzten Verkehrslast der Benutzereinrichtung (10'); geschätzten Verkehrslasten von benachbarten drahtlosen Knoten (20, 30, 20', 30');
geschätzter Interferenz, die durch die Benutzereinrichtung (10') in den benachbarten drahtlosen Knoten (20, 30, 20', 30') erzeugt wird.

6. Benutzereinrichtung nach einem der Ansprüche 4 bis 5, wobei die Benutzereinrichtung (10') konfiguriert ist, um für jeden geplanten Subframe zu entscheiden, ob Vollduplex in der Benutzereinrichtung (10') zu verwenden ist oder nicht.

## Revendications

1. Procédé mis en œuvre par un équipement d'utilisateur (10') pour déterminer quand il faut utiliser le duplex intégral dans ledit équipement d'utilisateur (10') pour communiquer dans un réseau de communication sans fil (1"), ledit procédé comprenant les étapes consistant à :
estimer (S10) une influence sur des nœuds sans fil voisines (20, 30, 20', 30') de l'utilisation du duplex intégral dans ledit équipement d'utilisateur (10') et
décider (S20) s'il faut utiliser le duplex intégral dans ledit équipement d'utilisateur (10') ou non, sur la base de ladite influence estimée.

2. Procédé selon la revendication 1, dans lequel ladite estimation (S10) d'une influence sur des nœuds sans fil voisines (20, 30, 20', 30') de l'utilisation du duplex intégral dans ledit équipement d'utilisateur (10') est basée sur au moins l'un des suivants :
une charge de trafic estimée dudit équipement utilisateur (10'); des charges de trafic estimées desdits nœuds sans fil voisines (20', 30, 20' 30') ;
une interférence estimée générée par ledit équipement d'utilisateur (10') dans lesdits nœud sans fil voisines (20, 30, 20', 30').

3. Procédé selon l'une quelconque des revendications 1 à 2, dans lequel ladite décision (S20) est mise en œuvre pour chaque sous-trame planifiée.

4. Équipement d'utilisateur (10') configuré pour déterminer quand il faut utiliser le duplex intégral dans ledit équipement d'utilisateur (10') pour communiquer dans un réseau de communication sans fil (1"), ledit équipement d'utilisateur (10') étant configuré pour estimer une influence sur des nœuds sans fil voisines (20, 30, 20', 30') de l'utilisation du duplex intégral dans ledit équipement d'utilisateur (10') ; et
ledit équipement utilisateur (10') étant configure pour décider s'il faut utiliser le duplex intégral dans ledit équipement d'utilisateur (10') ou non, sur la base de ladite influence estimée.

5. Équipement d'utilisateur selon la revendication 4, ledit équipement d'utilisateur (10') étant configuré pour estimer ladite influence sur des nœuds sans fil voisines (20, 30, 20', 30') de l'utilisation du duplex intégral dans ledit équipement d'utilisateur (10'), sur la base d'au moins l'un des suivants :
une charge de trafic estimée dudit équipement utilisateur (10'), des charges de trafic estimées desdits nœud sans fil voisines (20, 30, 20', 30') ;
une interférence estimée générée par ledit équipement d'utilisateur (10') dans lesdits nœud sans fil voisines (20, 30, 20', 30').

6. Équipement d'utilisateur selon l'une quelconque des revendications 4 à 5, ledit équipement d'utilisateur (10') étant configuré pour décider, pour chaque sous-trame planifiée, s'il faut utiliser le duplex intégral dans ledit équipement d'utilisateur (10'), ou non.
